# FASCICULE DE BREVET EUROPEEN

(11) **EP 4 376 455 B1**
(45) Date de publication et mention de la délivrance du brevet: **15.07.2026**
(21) Numéro de dépôt: 23208289.1
(22) Date de dépôt: 07.11.2023
(51) Int. Cl.: H04W 8/00, H04W 48/02, H04W 48/14, H04W 12/50, H04W 12/60, H04W 12/06, H04W 12/088, H04W 8/18, H04W 84/12

(54) **FILTRAGE D'ACCÈS D'UN OBJET CONNECTÉ À UN RÉSEAU DE COMMUNICATION LOCAL**
FILTERUNG DES ZUGRIFFS EINES OBJEKTS, DAS MIT EINEM LOKALEN KOMMUNIKATIONSNETZ VERBUNDEN IST
ACCESS FILTERING FOR AN OBJECT CONNECTED TO A LOCAL COMMUNICATIONS NETWORK

(30) Priorité: 25.11.2022 FR 2212365
(43) Date de publication de la demande: 29.05.2024
(73) Titulaire: Orange, 92130 Issy-les-Moulineaux (FR)
(72) Inventeur: BOUVET, Eric, 92326 CHATILLON CEDEX (FR); FONTAINE, Fabrice, 92326 CHATILLON CEDEX (FR)
(74) Mandataire: Vidon Brevets & Stratégie

(56) Documents cités:
- EP-A1- 2 922 328
- WO-A1-2019/186006
- US-A1- 2020 167 480

## Description

### Domaine technique

Le domaine de l'invention est celui des réseaux de communication locaux, tels que les réseaux de communication d'entreprise ou les réseaux de communication domestiques. Plus précisément, l'invention concerne l'interaction, avec de tels réseaux de communication locaux, d'objets communicants ou connectés, ou IoT (pour l'anglais « Internet of Things », en français « Internet des Objets »), tels que des ordinateurs, tablettes, téléphones intelligents (en anglais « smartphones »), mais également des caméras de type webcams, des stations météo, des capteurs, des thermostats, des drones, des capteurs de fumée, des ampoules connectées, etc.

### Art antérieur

De tels objets connectés envahissent le quotidien des utilisateurs ou des entreprises. Bien que ces objets permettent aux utilisateurs l'accès à de nouveaux services intéressants, ils accroissent aussi les faiblesses des réseaux de communication dans lesquels ils sont intégrés, en augmentant la surface d'attaque d'éventuels individus ou systèmes malveillants à l'égard de ces réseaux.

L'un des moments clés au cours desquels un réseau de communication local est vulnérable est celui de l'appairage d'un nouvel objet connecté à ce réseau local, notamment lorsqu'il utilise une technologie de communication sans fil, tel que le Wi-Fi^{®} ou le protocole de communication défini dans le standard IEEE 802.15.4, également appelé « Thread ».

En effet, lors de cette étape d'appairage, l'utilisateur envoie, à l'objet connecté nouvellement entrant, les informations nécessaires à sa connexion au réseau de communication local, et au réseau de communication étendu de type Internet auquel il permet d'accéder. Ces informations comprennent par exemple :
- Le nom du réseau de communication local (ou SSID pour « Service Set IDentifier » dans le cas d'un réseau Wi-Fi^{®}) et le mot de passe d'accès à ce réseau ;
- Certaines informations liées au compte de l'utilisateur (par exemple, l'identifiant de son compte Google^{®}, Amazon^{®} ou Apple^{®}) ;
- Certaines informations techniques, telles que la configuration de l'heure, une clé de cryptographie privée, ou encore un certificat de sécurité opérationnel, tel que proposé dans le protocole de connectivité Matter^{®} soutenu par le groupement d'entreprises « Connectivity Standards Alliance » (CSA).

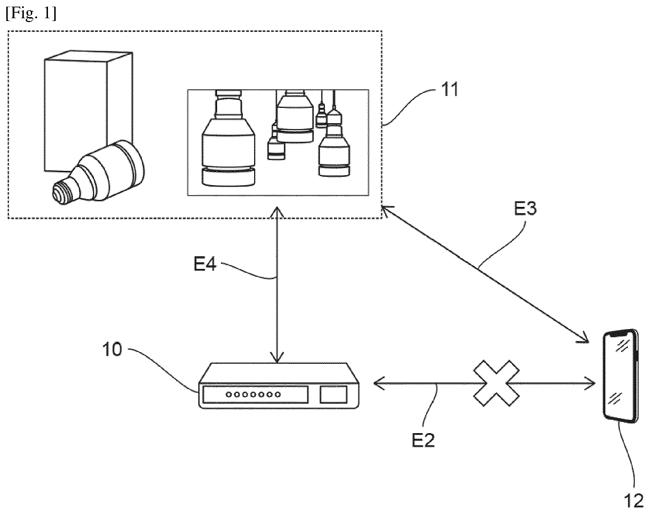

C'est le principe, par exemple, du protocole AllJoyn^{®}, qui offre un service « Onboarding Service », permettant à un nouvel équipement de rejoindre aisément un réseau de communication WiFi^{®} existant, comme illustré en relation avec la [Fig.1].

On considère un objet communicant, ou IoT, 11, en l'occurrence une ampoule connectée, par exemple de marque LIFX^{®}. Un réseau de communication local, par exemple domestique, est accessible via une passerelle résidentielle (ou Home Gateway HGW) 10. Ce réseau peut comprendre divers objets communicants ou équipements, tels qu'un ordinateur portable, une tablette, et un téléphone intelligent ou « smartphone » 12.

Selon le service AllJoyn^{®} « Onboarding Service », un équipement souhaitant s'appairer à ce réseau de communication local doit publier un réseau, c'est-à-dire créer un point d'accès WiFi^{®}, dont le SSID (pour l'anglais « Service Set Identifier », conformément à la norme IEEE 802.11) contient un préfixe AJ_ ou un suffixe _AJ. Ce point d'accès peut être sécurisé ou ouvert. Ceci correspond à une étape préliminaire E1, non représentée sur la [Fig.1]. Par exemple, l'ampoule connectée 11 publie un réseau WiFi^{®} « Lifi-A0_AJ ».

En parallèle, un utilisateur doit lancer, par exemple avec son téléphone intelligent 12, une application dédiée au service d'« onboarding ». Au lancement de cette application, le téléphone intelligent 12 désactive la connexion WiFi^{®} qu'il entretenait avec la passerelle résidentielle HGW 10 (étape E2), afin de se mettre à l'écoute des objets communicants en attente d'appairage. Au cours d'une étape E3, il se connecte au point d'accès créé par l'ampoule connectée 11, et envoie à cette dernière les données nécessaires à son appairage à la passerelle résidentielle HGW 10, à savoir une clé WiFi^{®} et le mot de passe de la passerelle. Ces données sont par exemple saisies par l'utilisateur sur l'interface de communication du téléphone intelligent 12. Elles peuvent également avoir été mémorisées au préalable dans cet équipement. Ces échanges AllJoyn^{®} sont cryptés, mais non authentifiés.

A réception, l'ampoule connectée 11 peut, au cours d'une étape E4, se connecter à la passerelle résidentielle HGW 10, en utilisant ces données d'appairage.

A l'issue de cette phase d'appairage, le téléphone intelligent 12 peut alors se déconnecter du réseau WiFi^{®} « Lifi-A0_AJ », pour se reconnecter au réseau de communication local de la passerelle résidentielle HGW 10.

Cette solution nécessite une intervention de l'utilisateur, qui doit effectuer une démarche active de lancement de l'application « Onboarding Service », afin d'autoriser son téléphone intelligent à scanner les réseaux AllJoyn^{®} éventuellement présents et à couper la connexion WiFi^{®} avec la passerelle résidentielle.

Elle est peu sécurisée, dans la mesure où elle ne met pas en œuvre de vérification de l'authenticité de l'objet communicant à appairer : il existe donc un risque que le téléphone mobile 12 transmette les données d'appairage confidentielles à un objet communicant malveillant.

De manière plus générale, et indépendamment de la mise en œuvre du protocole AllJoyn^{®} ou de tout autre protocole de connexion alternatif, cette étape d'appairage est cruciale, car elle peut mettre en danger le respect de la vie privée de l'utilisateur et/ou la sécurité de son réseau de communication local, et ce, pour deux raisons principales :
- d'une part, si cette étape d'appairage est défaillante sur le plan de la sécurisation des échanges, des données et informations sensibles peuvent être transmises en clair entre l'utilisateur et l'objet connecté. Elles peuvent donc être aisément accessibles à un tiers malveillant, qui peut les utiliser à des fins frauduleuses ;
- d'autre part, même si cette étape d'appairage est correctement réalisée, dans le respect de règles de confidentialité strictes, l'existence de vulnérabilités ou de failles de sécurité sur l'objet connecté peut également rendre ces données sensibles, accessibles à un tiers malveillant.

En effet, certains objets connectés présentent un faible niveau de sécurité, ou envoient les données de l'utilisateur vers des plateformes tierces, sans son consentement.

A ce jour, la procédure d'appairage préconisée par les fabricants d'objets connectés n'intègre généralement pas de mesures de sécurité : l'utilisateur est simplement invité à télécharger l'application du fabricant de l'objet connecté sur son téléphone intelligent ou sa tablette, et à suivre la procédure d'appairage proposée, qui consiste en un échange direct de diverses données entre l'objet connecté et le terminal de l'utilisateur.

Les raisons principales de cette absence de mesures de sécurité sont doubles : d'une part, le fabricant considère généralement que les objets connectés qu'il commercialise, et l'application d'appairage qu'il propose, ne présentent aucun problème de sécurité ou d'absence de respect de la vie privée de l'utilisateur ; si de tels problèmes existent, il n'en est le plus souvent pas conscient. D'autre part, le fabricant souhaite généralement garder le contrôle de son écosystème, i.e. de l'ensemble des objets connectés et équipements qu'il commercialise et qui communiquent ensemble, et est réticent à faire intervenir un mécanisme ou un équipement tiers de sécurisation.

Il existe donc un besoin d'une technique de sécurisation de l'appairage d'un objet connecté à un réseau de communication local, qui permette de renforcer la sécurité du réseau de communication local, quelles que soient les éventuelles vulnérabilités de l'objet connecté, et de respecter la vie privée des utilisateurs du réseau, et la confidentialité de leurs informations personnelles. Notamment, il existe un besoin d'une telle technique qui permette de filtrer l'accès des objets connectés à un réseau de communication local, en fonction de leurs éventuelles vulnérabilités. Il existe également un besoin d'une telle technique qui puisse être facilement mise en œuvre avec le déploiement du standard Matter^{®}. Il existe encore un besoin d'une telle technique qui ait un impact réduit sur l'expérience utilisateur, par rapport aux solutions existantes. Il existe enfin un besoin d'une telle technique qui permette de connecter les objets connectés à un écosystème sécurisé, tel que celui du fournisseur d'accès du réseau de communication local.

On notera que, par écosystème, on entend ici, et dans toute la suite du présent document, un ensemble d'équipements qui partagent des paramètres communs de sécurité et/ou de respect de la vie privée et/ou d'écoconception, et qui sont aptes à communiquer ensemble.

Dans l'ensemble de ce document, on entend par appairage d'un objet connecté, aussi bien un appairage de l'objet à un réseau de communication local (pour communiquer avec les autres équipements du réseau local ou vers le réseau étendu Internet), qu'une demande de commissionnement dans un écosystème applicatif (par exemple une « Fabric » selon le protocole Matter^{®}).

Le document EP2922328 divulgue un procédé d'appairage d'un terminal TER-V à un réseau local (dont l'accès est géré par une passerelle résidentielle TER-1) en déléguant l'autorisation d'appairage auprès d'un terminal de confiance TER-2 (typiquement un smartphone) déjà connecté au réseau local.

### Exposé de l'invention

L'invention est définie par les revendications.

L'invention répond à ce besoin en proposant un procédé de filtrage d'accès d'un objet connecté à un réseau de communication local, mis en œuvre par un équipement de routage du réseau local, qui comprend des étapes de :
- détection d'un objet connecté en attente d'appairage au sein du réseau local ;
- attribution d'un score de confiance à l'objet connecté, à partir d'informations relatives à l'objet connecté ;
- notification, à au moins un équipement de confiance du réseau local, de la demande d'appairage de l'objet connecté et du score de confiance attribué ;
- sur réception d'un refus d'appairage de l'équipement de confiance, blocage d'un accès de l'objet connecté au réseau local.

Ainsi, l'invention repose sur une approche tout à fait nouvelle et inventive de l'appairage d'un objet connecté à un réseau de communication local.

En effet, l'invention propose, d'une part, de faire intervenir un équipement de routage du réseau local dans la procédure d'appairage qui, selon l'art antérieur, se met en place directement entre l'objet connecté et le terminal de l'utilisateur, et d'autre part, d'attribuer un score de confiance à l'objet connecté, de façon à permettre un choix éclairé de l'utilisateur quant à l'autorisation d'accès de cet objet connecté au réseau.

Un tel mécanisme intelligent de filtrage d'accès au réseau présente l'avantage de pouvoir être facilement mis en œuvre avec le déploiement du standard Matter^{®} qui standardise les commandes d'appairage. On rappelle que Matter^{®} est conçu pour connecter des équipements en IPv6 en utilisant les protocoles Ethernet, Wi-Fi^{®} ou Thread^{®} au niveau de la couche liaison.

En outre, cette solution n'a pas d'impact sur l'expérience utilisateur, mais améliore la protection de sa vie privée, ainsi que la sécurité de son réseau, en permettant de bloquer l'accès au réseau d'un équipement potentiellement dangereux.

Elle est par ailleurs rapide à mettre en œuvre : dès qu'il détecte la présence d'un objet connecté en attente d'appairage, l'équipement de routage peut en dérouler les différentes étapes, et ce, plus rapidement que le temps nécessaire à un utilisateur pour télécharger, sur son smartphone ou sa tablette, l'application du fabricant de l'objet connecté et lancer une procédure d'appairage classique directe. On s'assure donc que l'équipement de routage puisse mettre en place cette procédure d'appairage sécurisée, en lieu et place de la procédure d'appairage classique proposée par le fabricant d'IoT.

En outre, l'équipement de routage peut avantageusement supporter plusieurs protocoles de communication (Wi-Fi^{®}, Bluetooth^{®}, Ethernet...), et donc détecter la tentative d'appairage d'un nouvel IoT, quel que soit le protocole de communication qu'il utilise.

Selon une première caractéristique de l'invention, les informations relatives à l'objet connecté sont reçues de l'objet connecté et/ou obtenues par l'équipement de routage sur requête adressée à un serveur distant.

En effet, certaines des informations peuvent être reçues directement de l'objet connecté par l'équipement de routage, car elles sont transmises par l'objet connecté dans le cadre de sa tentative d'appairage. D'autres informations peuvent être récupérées par l'équipement de routage au niveau IP (pour l'anglais « Internet Protocol »), par exemple d'un certificat présent sur un serveur Web, qui peut contenir des informations intéressantes sur l'objet connecté, et utiles pour décider du score de confiance à lui attribuer.

Par exemple, de telles informations relatives à l'objet connecté appartiennent au groupe comprenant :
- une adresse MAC de l'objet connecté ;
- une puissance d'un signal reçu en provenance de l'objet connecté ;
- un identifiant de connexion de l'objet connecté ;
- un identifiant de produit de l'objet connecté ;
- un identifiant de fabricant de l'objet connecté ;
- une durée de validité d'un certificat de sécurité associé à l'objet connecté ;
- un niveau de sécurité d'un certificat de sécurité associé à l'objet connecté ;
- un identifiant d'organisme ayant délivré un certificat de sécurité associé à l'objet connecté.

Selon une autre caractéristique de l'invention, le score de confiance attribué résulte d'une agrégation d'au moins certains des éléments appartenant au groupe comprenant :
- un score de vulnérabilité de l'objet connecté ;
- un score de respect de la vie privée d'un utilisateur de l'objet connecté ;
- un score d'écoconception de l'objet connecté.

En effet, le score de confiance attribué peut prendre en compte l'évaluation de différents aspects des points forts et points faibles de l'objet connecté, dans les domaines de la sécurité et résistance aux attaques malveillantes, du respect de la vie privée des utilisateurs, mais également dans le domaine de l'impact de l'objet connecté sur l'environnement. D'autres aspects pourraient également être pris en compte, tels que la responsabilité sociétale d'entreprise du fabricant, etc.

Pour faciliter la prise de décision de l'utilisateur quant au blocage ou non de l'accès de l'objet connecté au réseau, il est cependant avantageux que ces différentes évaluations prises en compte soient agrégées au sein d'un score de confiance unique, transmis à l'équipement de confiance de l'utilisateur. Ce score de confiance peut par exemple prendre une valeur choisie parmi le triplet « bon, moyen, mauvais », ou une couleur choisie dans la palette « vert, jaune, rouge ». L'utilisateur peut ainsi prendre rapidement une décision éclairée par ce score de confiance, simple et accessible, quant à l'acceptation ou non de l'appairage de l'objet connecté à son réseau de communication local.

Selon un aspect, l'équipement de confiance auquel est notifiée la demande d'appairage est l'équipement de confiance le plus proche de l'objet connecté et/ou un équipement de confiance appartenant à un administrateur du réseau local.

Par exemple, l'équipement de confiance le plus proche de l'objet connecté est identifié sur la base du RSSI (en anglais « Received Signal Strength Indicator », qui représente la puissance du signal reçu). Il est en effet particulièrement pratique, pour l'utilisateur, de recevoir la demande d'appairage sur un équipement proche de l'objet connecté qu'il est en train d'installer, et qui a une probabilité forte d'être son smartphone personnel.

En variante, la demande d'appairage est notifiée à un équipement de confiance de l'administrateur du réseau, par exemple les parents dans le cas d'un réseau domestique, qui peuvent ainsi contrôler l'installation de nouveaux objets connectés par les enfants, et s'y opposer le cas échéant.

Selon une variante optionnelle, un tel procédé de filtrage d'accès comprend également :
- une émission, à destination de l'équipement de confiance, d'une requête d'obtention d'un code associé à l'objet connecté ;
- une connexion de l'équipement de routage, à partir du code obtenu de l'équipement de confiance, à l'objet connecté, afin d'obtenir les informations relatives à l'objet connecté.

Par exemple, la requête d'obtention d'un code est une requête de scan d'un QR-code associé à l'objet connecté, et le QR-code scanné est reçu par l'équipement de routage en provenance de l'équipement de confiance.

On s'assure ainsi avantageusement que l'utilisateur de l'équipement de confiance est situé à proximité de l'objet connecté, et on renforce encore la sécurité de l'appairage, en évitant qu'un tiers malveillant extérieur au réseau de communication local ne prenne la main, à distance, sur un objet connecté. Par exemple, dans le cas d'une caméra installée au domicile d'Alice, on évite qu'un voisin malveillant, Bob, ne détecte la présence de la caméra, ne procède à un appairage avec son propre réseau, et voie, sans y être autorisé, ce qui se passe au domicile d'Alice.

Selon une autre variante optionnelle, à l'issue d'un appairage de l'objet connecté à l'équipement de routage du réseau de communication local, il comprend une émission, à destination de l'équipement de confiance, d'une demande de souhait d'appairage de l'objet connecté à l'équipement de confiance, et, en cas de réception d'un souhait d'appairage à l'équipement de confiance, une émission, à destination de l'objet connecté, d'une requête d'ouverture d'une séquence d'appairage.

Ainsi, après appairage de l'objet connecté au réseau de communication local (et donc après connexion de l'objet à un écosystème dont fait partie l'équipement de routage, e.g. celui de l'opérateur ou du fournisseur d'accès), l'équipement de routage peut demander à l'utilisateur s'il souhaite que cet objet connecté rejoigne d'autres écosystèmes (par exemple celui du fabricant ou du vendeur de l'objet connecté).

Cette solution permet aux utilisateurs d'utiliser leurs objets connectés dans plusieurs environnements sécurisés : par exemple, celui de leur fournisseur d'accès mais aussi éventuellement celui de tiers. On évite ainsi l'enfermement des objets connectés dans un écosystème unique.

Dans ce cas, en option, si l'objet connecté appairé à l'équipement de routage est inapte à être également appairé à l'équipement de confiance, l'équipement de routage joue le rôle de serveur mandataire entre l'équipement de confiance et l'objet connecté.

Ceci est avantageux dans le cas d'un objet connecté qui, du fait de son protocole de communication, ne peut s'appairer qu'à un seul écosystème à la fois, car ce rôle de proxy joué par l'équipement de routage permet de contourner cette limitation. L'équipement de confiance se connecte alors à l'équipement de routage, en pensant qu'il s'agit de l'objet connecté, et l'équipement de routage joue le rôle d'intermédiaire transparent entre l'IoT et l'équipement de confiance.

Selon un aspect avantageux, l'équipement de routage est une passerelle d'accès au réseau de communication local. Le fournisseur d'accès, propriétaire de la passerelle, peut ainsi rester un intermédiaire entre son client et les différents objets connectés qu'il utilise.

L'invention concerne également un produit programme d'ordinateur comprenant des instructions de code de programme pour la mise en œuvre d'un procédé de filtrage d'accès tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de filtrage d'accès selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de filtrage d'accès précité.

L'invention concerne encore un équipement de routage d'un réseau de communication local, qui comprend un processeur configuré pour exécuter des étapes de :
- détection d'un objet connecté en attente d'appairage au sein du réseau local ;
- attribution d'un score de confiance à l'objet connecté, à partir d'informations relatives à l'objet connecté ;
- notification, à un équipement de confiance du réseau local, de la demande d'appairage de l'objet connecté et du score de confiance attribué ;
- sur réception d'un refus d'appairage de l'équipement de confiance, blocage d'un accès de l'objet connecté au réseau local.

L'invention concerne encore un passerelle résidentielle qui comprend un processeur configuré pour exécuter des étapes de :
- détection d'un objet connecté en attente d'appairage au sein du réseau local ;
- attribution d'un score de confiance à l'objet connecté, à partir d'informations relatives à l'objet connecté ;
- notification, à un équipement de confiance du réseau local, de la demande d'appairage de l'objet connecté et du score de confiance attribué ;
- sur réception d'un refus d'appairage de l'équipement de confiance, blocage d'un accès de l'objet connecté au réseau local.

L'équipement de routage, la passerelle d'accès et le programme d'ordinateur correspondants précités présentent au moins les mêmes avantages que ceux conférés par le procédé de filtrage d'accès selon la présente invention.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig.1] illustre un procédé d'appairage d'un objet communicant à un réseau de communication local, mettant en œuvre le service AllJoyn^{®} Onboarding de l'art antérieur ;
[Fig.2] présente une vue schématique d'un réseau local de communication et des différents objets communicants qui y sont connectés, selon un mode de réalisation de l'invention ;
[Fig.3] présente sous forme de logigramme les différentes étapes du procédé de filtrage d'accès selon un mode de réalisation de l'invention ;
[Fig.4] présente un schéma synoptique d'un équipement de routage mettant en œuvre le procédé de la [Fig.3].

### Description détaillée de modes de réalisation de l'invention

Le principe général de l'invention repose sur le filtrage de l'accès d'un objet connecté à un réseau de communication local, par un équipement de routage de ce réseau, en fonction d'une décision d'un utilisateur fondée sur un score de confiance affecté à l'objet connecté par l'équipement de routage.

On s'attache plus en détail dans la suite de ce document à décrire la mise en œuvre d'un mode de réalisation de l'invention dans le cadre d'un réseau domestique, chez un utilisateur particulier, dans lequel différents équipements forment un réseau en étoile autour d'un point central, à savoir une passerelle d'accès, par exemple la Livebox^{®} d'Orange^{®}. L'invention s'applique bien sûr également à tout autre type de réseau de communication local (LAN, pour « Local Area Network »), auquel une pluralité d'équipements de communication sont connectés.

Notamment, un tel réseau local pourrait présenter une structure de réseau maillé de type Thread^{®}, utilisant un protocole radio sans fil alternatif au Wi-Fi^{®}. On rappelle que la technologie Thread^{®} est comparable à la technique Zigbee^{®}, mais présente de meilleures performances en termes de consommation énergétique, est plus résistante et également plus facile à étendre. Dans un tel réseau, la passerelle d'accès, par exemple la Livebox^{®} d'Orange^{®}, peut jouer le rôle d'un équipement de routage Thread^{®}. Ce qui sera décrit ci-après dans l'exemple particulier de réalisation d'un réseau en étoile organisé autour d'une passerelle d'accès pourra sans difficulté être étendu à tout autre type de réseau local, et notamment un réseau maillé de type Thread^{®}, dans lequel les différentes étapes du procédé de filtrage d'accès selon l'invention sont mises en œuvre par l'un quelconque des équipements de routage du réseau local.

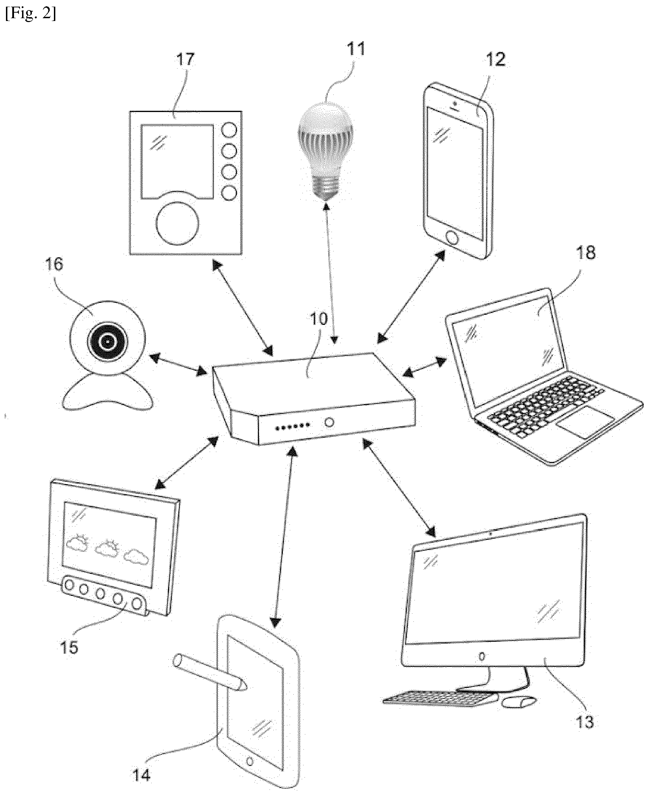

Dans le réseau domestique représenté schématiquement sur la [Fig.2], une passerelle résidentielle HGW référencée 10 permet de relier un réseau de communication local et un réseau étendu tel que le réseau Internet (non représenté). Une telle passerelle résidentielle HGW 10 intègre un serveur DHCP : elle effectue le routage des paquets de données sur le réseau, et peut également jouer le rôle de pare-feu, de proxy, ...

Dans l'exemple de la [Fig.2], de nombreux équipements sont présents sur le réseau local, à savoir :
- une ampoule connectée 11 ;
- un téléphone intelligent (ou « smartphone ») 12 ;
- un ordinateur de type PC 13 ;
- une tablette 14 ;
- une station météo 15 ;
- une webcam 16 ;
- un thermostat 17 ;
- un ordinateur portable 18.

Cette liste n'est bien sûr pas exhaustive, et de nombreux autres objets communicants peuvent être présents sur le réseau local de l'utilisateur. Ces objets communicants peuvent être reliés au réseau par voie filaire (câble Ethernet, port USB (pour l'anglais « Universal Serial Bus ») ...) ou sans fil (Wi-Fi^{®}, Bluetooth^{®}, zigbee^{®}). Ils comprennent tous types d'objets physiques, aptes à communiquer numériquement sur le réseau local, en vue d'un échange de données, et qui sont compatibles avec le réseau DHCP. Ils comprennent également les applications logicielles associées à certains objets connectés non IP (« Internet Protocol »), fonctionnant sur des technologies sans fil tels que BLE (pour « Bluetooth^{®} Low Energy »), Z-wave^{®}, Thread^{®}, etc.

De tels objets communicants peuvent être désignés par l'acronyme IoT, pour l'anglais « Internet of Things », en français « Internet des objets ».

On s'intéresse plus en détail ci-après à la tentative d'appairage de ces objets communicants sur le réseau de communication local de l'utilisateur, par exemple selon le protocole de transmission radio sans fil WiFi^{®}.

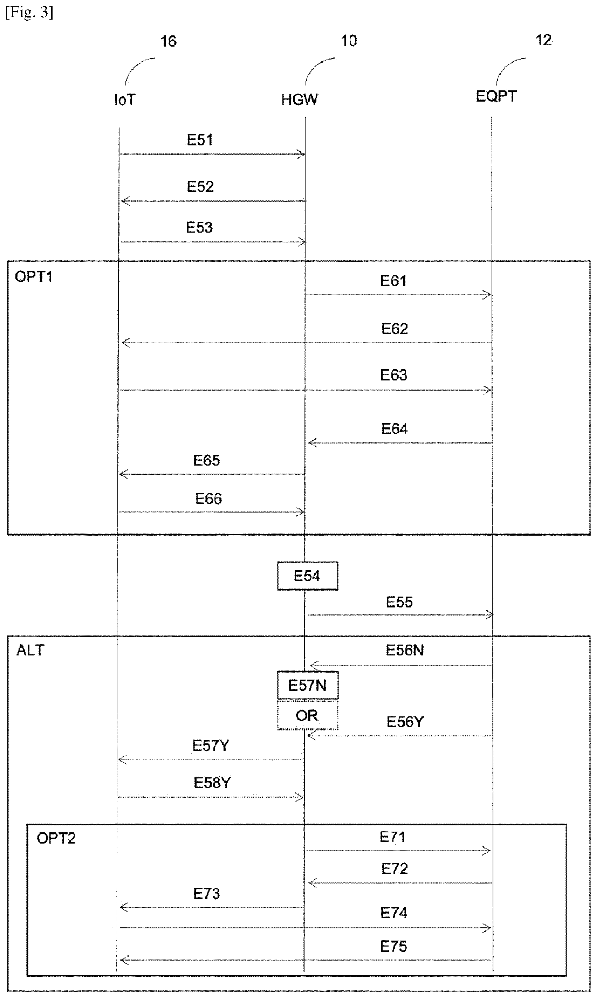

On présente désormais, en relation avec la [Fig.3], les différentes étapes du procédé de filtrage d'accès d'un objet connecté IoT référencé 16 (par exemple, la webcam de la [Fig.2]) à un réseau de communication local selon un mode de réalisation de l'invention.

Dans cet exemple, on considère que ce procédé est mis en œuvre dans une passerelle d'accès HGW référencée 10, par exemple une Livebox^{®} d'Orange^{®}.

On s'intéresse à l'arrivée de l'objet connecté IoT référencé 16 dans le réseau local. Lors de sa mise sous tension, cet objet connecté 16 passe en mode appairage, et diffuse dans son entourage des demandes d'appairage qui peuvent être portées, selon le protocole de communication embarqué dans l'IoT 16, par une technologie de communication de type Wi-Fi^{®}, Bluetooth^{®} ou Ethernet par exemple. Cette phase dite d'« advertising » (en anglais, publicité) est schématisée en [Fig.3] par l'étape référencée E51.

La passerelle résidentielle HGW 10 détecte en permanence (étape référencée E52) quels sont les objets présents autour d'elle. Elle est notamment capable de détecter des objets en mode appairage :
- au niveau Wi-Fi^{®} (par exemple dans le standard Matter^{®}, les objets en mode appairage ouvrent un point d'accès ouvert Matter-xxx ; dans le protocole propriétaire Tuya^{®}, les objets ouvrent un point d'accès SmartLife-xxx) ;
- au niveau Bluetooth^{®} (par exemple, l'objet référencé 16 émet des paquets d'« advertising » avec un nom spécifique comme DCS-xxx pour les caméras D-Link^{®}) ;
- au niveau Ethernet (par exemple, dans le standard Matter, les objets vont émettre des requêtes mDNS spécifiques).

Au cours d'une étape référencée E53, la passerelle HGW 10 récupère des informations sur l'objet IoT référencé 16 (par exemple au niveau radio Wi-Fi : @MAC, nom du SSID, force du signal, etc). En complément, la passerelle HGW 10 peut aussi récupérer des informations au niveau IP, si elle est capable de se connecter à l'objet. Ces informations peuvent par exemple être récupérées d'un certificat présent sur un serveur Web. Ce certificat peut contenir des informations intéressantes comme un identifiant de produit de l'objet connecté 16 (en anglais « product ID »), un identifiant du vendeur de l'objet connecté 16 (en anglais « vendor ID »), le nom de l'organisme qui a délivré ce certificat, une durée de validité, un niveau de sécurité...

Ces informations sur l'objet connecté IoT référencé 16 peuvent ainsi être récupérées directement de l'objet lui-même, ou obtenues de sources locales et/ou externes. A partir des informations ainsi collectées, la passerelle HGW 10 calcule, au cours d'une étape référencée E54, un score de confiance à attribuer à l'objet référencé 16.

Pour cela, elle peut notamment interroger des bases distantes ou locales pour vérifier si le fabricant de l'objet connecté 16, ou le certificat qui lui est associé, est « sûr » :
- le certificat a-t-il été révoqué (notamment, est-il présent dans une ou plusieurs liste(s) de révocation de certificats (en anglais, CRL pour « Certificate Revocation List », à savoir une liste de certificats numériques qui ont été révoqués par l'autorité de certification émettrice avant leur date d'expiration prévue et ne doivent plus être fiables)
- Le certificat est-il valide (par exemple en interrogeant le grand livre de conformité distribué de Matter^{®}, appelé en anglais DCL pour « Distributed Compliance Ledger ») ? Le DCL de Matter est un réseau de stockage distribué, sécurisé par cryptographie, basé sur la technologie « blockchain » (en français, chaînes de blocs). Il permet à la Connectivity Standards Alliance (CSA) et aux vendeurs autorisés de publier des informations sur leurs appareils Matter^{®}. Ces informations peuvent ensuite être récupérées à l'aide de clients DCL. Avec toutes ces informations sur les appareils stockées dans le DCL, les écosystèmes Matter^{®} peuvent consulter le DCL pour vérifier l'état de conformité de la certification du dispositif, ou par exemple obtenir des instructions de mise en service, des liens vers des manuels et des informations sur les produits.
- Le produit a-t-il des vulnérabilités publiques connues (« CVE » pour l'anglais « Common Vulnerabilities and Exposures », qui est un dictionnaire des informations publiques relatives aux vulnérabilités de sécurité, maintenu par l'organisme MITRE, soutenu par le département de la Sécurité Intérieure des Etats-Unis) ?
- Le fabricant a-t-il une présence physique en Europe (ce qui peut constituer une garantie intéressante du respect du Règlement Général sur la Protection des Données (RGPD), règlement UE 2016/679 du Parlement européen et du Conseil du 27 avril 2016 relatif à la protection des personnes physiques à l'égard du traitement des données à caractère personnel et à la libre circulation de ces données) ;
- etc.

La passerelle HGW 10 peut également collecter des informations sur les méthodes de fabrication de l'objet connecté 16 : répond-il à certaines normes d'éco-conception ? son fabricant a-t-il mis en place une politique de responsabilité sociale d'entreprise ? quel est son impact carbone ?

En fonction des informations reçues, la passerelle HGW 10 attribue un score de confiance à l'objet connecté référencé 16, qui peut prendre par exemple une valeur choisie au sein du triplet (bas, moyen, haut), ou une couleur choisie dans la palette (rouge, jaune, vert). Ce score de confiance agrège, par exemple sous forme de moyenne pondérée, les différents scores obtenus par l'objet connecté IoT 16 en matière de sécurité, de respect de la vie privée, d'écoconception...

Au cours d'une étape référencée E55, la passerelle HGW 10 transmet ce score de confiance à au moins un équipement de confiance EQPT référencé 12, par exemple le smartphone de l'utilisateur ayant mis sous tension l'objet connecté 16, et/ou celui de l'administrateur du réseau local, ou un décodeur TV d'Orange (en anglais set-top box). Dans la suite, par souci de simplification, on parlera d'un unique équipement de confiance EQPT référencé 12 ; l'ensemble des enseignements ci-après peuvent cependant être directement étendus au cas où la passerelle d'accès HGW référencée 10 est en communication avec plusieurs équipements de confiance distincts.

Ce score de confiance est transmis dans une notification qui contient également une demande à l'utilisateur d'accepter ou non la connexion de ce nouvel objet 16 à son réseau local. Cette notification peut aussi contenir une requête, pour l'utilisateur, pour savoir s'il souhaite que cet objet 16 rejoigne l'écosystème de confiance Orange (« Fabric » dans la norme Matter^{®} ; dans ce standard, on désigne par le terme « Fabric » une collection logique de nœuds communicants, partageant une racine de confiance commune, et un état de configuration distribué commun). Cette notification ou « publicité ciblée » (étape E55) peut être envoyée sur le ou le(s) terminaux de confiance les plus proche(s) de l'objet connecté IoT référencé 16 (par exemple en utilisant le RSSI, à savoir la puissance du signal reçu en provenance de l'objet IoT 16) ou bien sur celui des administrateurs du réseau, par exemple les « parents » dans le cas d'un réseau domestique. La notification peut contenir un lien sur une application Orange et/ou des informations détaillées sur l'objet détecté référencé 16.

En fonction de la décision de l'utilisateur de l'équipement de confiance référencé 12, deux situations peuvent se présenter (référence ALT sur la [Fig.3]).

L'utilisateur peut décider, sur le fondement de la notification reçue à l'étape référencée E55 et du score de confiance qu'elle contient, qu'il refuse d'appairer ce nouvel objet connecté à son réseau local, car il estime qu'il ne peut lui accorder un degré de confiance suffisant. Dans ce cas, l'équipement de confiance EQPT référencé 12 adresse à la passerelle HGW 10 une notification de refus au cours d'une étape référencée E56N.

Ce sera notamment vraisemblablement le cas si le score de confiance attribué par la passerelle d'accès HGW référencée 10 est « mauvais » ou « rouge », mais également, si l'utilisateur est de caractère prudent, également dans le cas où le score de confiance est « moyen » ou « jaune ».

Au cours d'une étape référencée E57N, la passerelle HGW 10 met alors en œuvre un blocage de l'accès de l'objet IoT référencé 16 au réseau de communication local, ou l'isole de ce dernier. Pour ce faire, la passerelle HGW 10 peut mettre en place des règles de pare-feu (en anglais « firewall ») utilisant l'adresse IP, ou bloquer la connexion Wi-Fi en utilisant l'adresse MAC, ou ne pas répondre aux requêtes DNS (pour l'anglais « Domain Name Server »), etc.

L'utilisateur peut également décider, en alternative, sur le fondement de la notification reçue à l'étape référencée E55 et du score de confiance qu'elle contient, qu'il accepte d'appairer ce nouvel objet connecté à son réseau local, car il estime qu'il peut lui accorder un degré de confiance suffisant. Dans ce cas, l'équipement de confiance EQPT référencé 12 adresse à la passerelle HGW 10 une notification d'acceptation au cours d'une étape référencée E56Y.

Ce sera vraisemblablement le cas si le score de confiance reçu est « bon » ou « vert » ; ce pourra aussi être le cas si le score de confiance reçu est « orange » ou « moyen », et que l'utilisateur en décide ainsi.

Au cours d'une étape référencée E57Y, la passerelle d'accès HGW 10 adresse alors à l'objet connecté 16 l'ensemble des paramètres de configuration qui lui sont nécessaires pour se connecter au réseau local, tels que le SSID, le mot de passe du réseau, des données relatives à la « Fabric » de l'écosystème Orange^{®}, etc. Au cours d'une étape référencée E58Y, l'objet connecté IoT référencé 16 peut alors se connecter à la passerelle HGW 10, et accéder à l'ensemble des ressources du réseau local et de la « Fabric » de l'écosystème Orange^{®}.

On a également représenté, sur la [Fig.3], deux variantes optionnelles OPT1 et OPT2 qui peuvent être mises en œuvre conjointement, ou indépendamment l'une de l'autre.

La variante référencée OPT1 comprend un ensemble d'étapes référencées E61 à E66 et vise à renforcer la fiabilité de l'attribution du score de confiance à l'objet connecté 16. Pour ce faire, au cours d'une étape référencée E61, la passerelle HGW 10 adresse à l'équipement de confiance EQPT référencé 12 une notification de saisie d'un code. Par exemple, la passerelle HGW 10 peut demander à l'utilisateur de scanner un QR-code présent sur l'objet connecté référencé 16, ou de saisir manuellement un code qui permettra à la passerelle HGW 10 de se connecter à l'objet connecté référencé 16 pour récupérer un certificat (par exemple le « Device Attestation Certificate » dans le standard Matter^{®}, en français « certificat d'attestation de dispositif »).

L'utilisation d'un QR-code présente plusieurs avantages. Tout d'abord, cette étape imposée à l'utilisateur permet de vérifier qu'il se trouve bien à proximité de l'objet connecté IoT référencé 16. En outre, ce QR-code peut contenir différentes informations utiles, telles que le certificat Matter^{®}, mais également les différents canaux d'« advertising » (Wi-Fi^{®}, Bluetooth^{®}...) que l'objet connecté IoT embarque.

Ainsi, au cours d'une étape référencée E62, l'utilisateur utilise l'équipement de confiance EQPT référencé 12 pour scanner le QR-code présent sur l'objet connecté IoT référencé 16. Les informations qu'il contient sont transmises à l'équipement de confiance EQPT référencé 12 au cours d'une étape référencée E63, puis transférées au cours d'une étape référencée E64 à la passerelle d'accès HGW référencée 10.

Selon le standard Matter^{®}, ce QR-code, imprimé sur l'objet connecté IoT référencé 16, permet à l'utilisateur d'obtenir toutes les informations nécessaires à la configuration de l'appareil. Le QR-Code contient un code binaire codé en base38 incluant les valeurs :
- Version
- ID du vendeur
- ID du produit
- Flux personnalisé
- Capacités de découverte
- Discriminateur
- Code d'accès
- Bourrage
- Données TLV (facultatif) (utilisées pour configurer le flux personnalisé).

Au cours d'une étape référencée E65, la passerelle d'accès HGW référencée 10 utilise le QR-code reçu pour se connecter à l'objet connecté IoT référencé 16. Au cours d'une étape référencée E66, l'objet connecté IoT référencé 16 transmet des informations avancées à la passerelle d'accès HGW référencée 10, par exemple le certificat Matter^{®}.

La variante référencée OPT2, qui peut ou non se cumuler avec la variante référencée OPT1, comprend un ensemble d'étapes référencées E71 à E75 et vise à élargir l'appairage de l'objet connecté IoT référencé 16 à plusieurs écosystèmes.

En effet, une fois réalisée la connexion de l'objet connecté IoT référencé 16 à l'écosystème Orange^{®} (ou « Fabric » dans le standard Matter^{®}), la passerelle d'accès HGW référencée 10 peut demander à l'utilisateur s'il souhaite que cet objet référencé 16 rejoigne d'autres écosystèmes ou « Fabrics » (e.g. celle d'Amazon^{®}, Google^{®}, Apple^{®}, etc.). On rappelle que Matter^{®} traite les réseaux comme des ressources partagées : il ne stipule pas de propriété ou d'accès exclusif aux réseaux. Par conséquent, il est possible de faire fonctionner plusieurs réseaux Matter, appelés "fabrics", sur un même ensemble de réseaux constitutifs.

Ainsi, au cours d'une étape référencée E71, la passerelle d'accès HGW référencée 10 adresse à l'équipement de confiance EQPT référencé 12 une notification pour lui demander si une connexion à un écosystème tiers est souhaité.

En cas de réponse positive adressée par l'équipement de confiance EQPT référencé 12 au cours d'une étape référencée E72, la passerelle d'accès HGW référencée 10 envoie (étape référencée E73), à l'objet connecté IoT référencé 16, une demande d'ouverture d'une nouvelle procédure d'appairage (par exemple, en utilisant la procédure « Basic Commissioning Method » ou « Enhanced Commissioning Method » dans Matter^{®}, en français, « Méthode de mise en service de base » ou « Méthode de mise en service améliorée »).

Au cours d'une étape référencée E74, l'objet connecté IoT référencé 16 lance alors une nouvelle phase d'« advertising » (en Wi-Fi^{®}, en Bluetooth^{®}, etc. selon les canaux de communication à sa disposition), à destination de l'équipement de confiance EQPT référencé 12. Ce dernier, au cours d'une étape référencée E75, lui adresse en retour les paramètres de configuration nécessaires pour qu'il rejoigne l'écosystème tiers choisi, par exemple la Fabric Amazon^{®}.

On notera que, dans le cadre de cette variante OPT2, si l'objet connecté IoT référencé 16 n'est pas capable d'ouvrir une nouvelle procédure d'appairage (e.g. parce que son protocole propriétaire ne le lui permet pas, par exemple le protocole Tuya^{®}), la passerelle d'accès HGW référencée 10 peut simuler l'objet connecté IoT référencé 16 auprès de l'équipement de confiance EQPT référencé 12, et jouer le rôle de serveur mandataire, ou proxy, entre ces deux équipements.

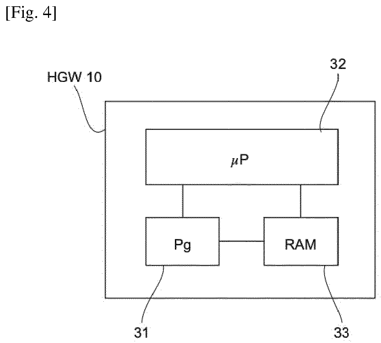

On présente désormais, en relation avec la [Fig.4], la structure matérielle d'un équipement de routage, par exemple une passerelle résidentielle HGW référencée 10, mettant en œuvre les étapes du logigramme de la [Fig.3], dans l'un quelconque de ses modes de réalisation.

Une telle passerelle résidentielle HGW 10 comprend une mémoire vive 33 (par exemple une mémoire RAM), une unité de traitement 32 équipée par exemple d'un processeur, et pilotée par un programme d'ordinateur, stocké dans une mémoire morte 31 (par exemple une mémoire ROM ou un disque dur). A l'initialisation, les instructions de code du programme d'ordinateur sont par exemple chargées dans la mémoire vive 33 avant d'être exécutées par le processeur de l'unité de traitement 32.

Le terme unité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

La mémoire vive 33 contient notamment les informations collectées sur l'objet connecté référencé 16 au cours de l'étape E53, ainsi que les différents paramètres nécessaires au calcul du score de confiance, et le score de confiance calculé lui-même. Le processeur de l'unité de traitement 32 pilote l'émission et la réception des différentes notifications adressées à l'équipement de confiance EQPT référencé 12 et à l'objet connecté IoT référencé 16 selon le logigramme de la [Fig.3], ainsi que le calcul du score de confiance au cours de l'étape référencée E54.

La [Fig.4] illustre seulement une manière particulière, parmi plusieurs possibles, de réaliser la passerelle résidentielle HGW 10, afin qu'elle effectue les étapes du procédé détaillé ci-dessus, en relation avec la [Fig.3] (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où la passerelle résidentielle HGW 10 est réalisée avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec une passerelle résidentielle de type Livebox^{®}, mais peuvent plus généralement être mis en œuvre dans toutes les passerelles, routeurs ou points d'accès Wi-Fi^{®} ou Thread^{®} (répéteur Wi-Fi^{®}, point d'accès 4G...)

## Revendications

1. Procédé de filtrage d'accès d'un objet connecté (16) à un réseau de communication local, mis en œuvre par un équipement de routage (10) dudit réseau local,
**caractérisé en ce qu'**il comprend des étapes de :
- détection (E52) d'un objet connecté (16) en attente d'appairage au sein dudit réseau local ;
- attribution (E54) d'un score de confiance audit objet connecté, à partir d'informations relatives audit objet connecté ;
- notification (E55), à au moins un équipement de confiance (12) dudit réseau local, de la demande d'appairage dudit objet connecté et dudit score de confiance attribué ;
- réception d'une notification de refus d'appairage (E56N) ou d'acceptation d'appairage (E56Y), en provenance dudit au moins un équipement de confiance(12), établie sur le fondement de ladite demande d'appairage dudit objet connecté et dudit score de confiance attribué ;
- si ladite notification reçue est une notification de refus d'appairage (E56N), blocage (E57N) d'un accès dudit objet connecté (16) audit réseau local
- si ladite notification reçue est une notification d'acceptation d'appairage (E56Y), transmission audit objet connecté (16) d'un ensemble de paramètres de configuration pour se connecter audit réseau local.

2. Procédé de filtrage d'accès selon la revendication 1, **caractérisé en ce que** lesdites informations relatives audit objet connecté (16) sont reçues (E53) dudit objet connecté et/ou obtenues par ledit équipement de routage sur requête adressée à un serveur distant.

3. Procédé de filtrage d'accès selon l'une quelconque des revendications 1 et 2, **caractérisé en ce que** lesdites informations relatives audit objet connecté appartiennent au groupe comprenant :
- une adresse MAC dudit objet connecté ;
- une puissance d'un signal reçu en provenance dudit objet connecté ;
- un identifiant de connexion dudit objet connecté ;
- un identifiant de produit dudit objet connecté ;
- un identifiant de fabricant dudit objet connecté ;
- une durée de validité d'un certificat de sécurité associé audit objet connecté ;
- un niveau de sécurité d'un certificat de sécurité associé audit objet connecté ;
- un identifiant d'organisme ayant délivré un certificat de sécurité associé audit objet connecté.

4. Procédé de filtrage d'accès selon l'une quelconque des revendications 1 à 3, **caractérisé en ce que** ledit score de confiance attribué résulte d'une agrégation d'au moins certains des éléments appartenant au groupe comprenant :
- un score de vulnérabilité dudit objet connecté ;
- un score de respect de la vie privée d'un utilisateur dudit objet connecté ;
- un score d'écoconception dudit objet connecté.

5. Procédé de filtrage d'accès selon l'une quelconque des revendications 1 à 4, **caractérisé en ce que** ledit au moins un équipement de confiance auquel est notifiée ladite demande d'appairage est ledit équipement de confiance le plus proche dudit objet connecté ou un équipement de confiance appartenant à un administrateur dudit réseau local.

6. Procédé de filtrage d'accès selon l'une quelconque des revendications 1 à 5, **caractérisé en ce qu'il** comprend également :
- une émission (E61), à destination dudit au moins un équipement de confiance (12), d'une requête d'obtention d'un code associé audit objet connecté ;
- une connexion (E65) dudit équipement de routage, à partir dudit code obtenu dudit au moins un équipement de confiance, audit objet connecté, afin d'obtenir lesdites informations relatives audit objet connecté.

7. Procédé de filtrage d'accès selon la revendication 6, **caractérisé en ce que** ladite requête d'obtention d'un code est une requête de scan d'un QR-code associé audit objet connecté, **et en ce que** le QR-code scanné est reçu (E63) par ledit équipement de routage en provenance dudit au moins un équipement de confiance.

8. Procédé de filtrage d'accès selon l'une quelconque des revendications 1 à 7, **caractérisé en ce que,** lorsque ladite notification reçue est une notification d'acceptation d'appairage (E56Y), à l'issue d'un appairage dudit objet connecté audit équipement de routage dudit réseau de communication local, il comprend une émission (E71), à destination dudit au moins un équipement de confiance, d'une demande de souhait d'appairage dudit objet connecté audit au moins un équipement de confiance, et, en cas de réception (E72) d'un souhait d'appairage audit au moins un équipement de confiance, une émission (E73), à destination dudit objet connecté, d'une requête d'ouverture d'une séquence d'appairage.

9. Procédé de filtrage d'accès selon la revendication 8, **caractérisé en ce que,** si ledit objet connecté appairé audit équipement de routage est inapte à être également appairé audit au moins un équipement de confiance, ledit équipement de routage joue le rôle de serveur mandataire entre ledit au moins un équipement de confiance et ledit objet connecté.

10. Procédé de filtrage d'accès selon l'une quelconque des revendications 1 à 9, **caractérisé en ce que** ledit équipement de routage est une passerelle d'accès audit réseau de communication local.

11. Produit programme d'ordinateur comprenant des instructions de code de programme pour la mise en œuvre d'un procédé de filtrage d'accès selon l'une quelconque des revendications 1 à 10, lorsqu'il est exécuté par un processeur intégré au sein d'un équipement de routage (10).

12. Équipement de routage (10) d'un réseau de communication local,
**caractérisé en ce qu'il** comprend un processeur configuré pour exécuter des étapes de :
- détection (E52) d'un objet connecté (16) en attente d'appairage au sein dudit réseau local ;
- attribution (E54) d'un score de confiance audit objet connecté, à partir d'informations relatives audit objet connecté ;
- notification (E55), à au moins un équipement de confiance (12) dudit réseau local, de la demande d'appairage dudit objet connecté et dudit score de confiance attribué ;
- réception d'une notification de refus d'appairage (E56N) ou d'acceptation d'appairage (E56Y), en provenance dudit au moins un équipement de confiance (12), établie sur le fondement de ladite demande d'appairage dudit objet connecté et dudit score de confiance attribué ;
- si ladite notification reçue est une notification de refus d'appairage (E56N), blocage (E57N) d'un accès dudit objet connecté (16) audit réseau local
- si ladite notification reçue est une notification d'acceptation d'appairage (E56Y), transmission audit objet connecté (16) d'un ensemble de paramètres de configuration pour se connecter audit réseau local.

13. Passerelle résidentielle (HGW), **caractérisée en ce qu'**elle comprend un processeur configuré pour exécuter des étapes de :
- détection d'un objet connecté en attente d'appairage au sein dudit réseau local ;
- attribution d'un score de confiance audit objet connecté, à partir d'informations relatives audit objet connecté ;
- notification, à au moins un équipement de confiance (12) dudit réseau local, de la demande d'appairage dudit objet connecté et dudit score de confiance attribué ; ;
- réception d'une notification de refus d'appairage (E56N) ou d'acceptation d'appairage (E56Y), en provenance dudit au moins un équipement de confiance, établie sur le fondement de ladite demande d'appairage dudit objet connecté et dudit score de confiance attribué ;
- si ladite notification reçue est une notification de refus d'appairage (E56N), blocage (E57N) d'un accès dudit objet connecté (16) audit réseau local ;
- si ladite notification reçue est une notification d'acceptation d'appairage (E56Y), transmission audit objet connecté (16) d'un ensemble de paramètres de configuration pour se connecter audit réseau local-.

14. Procédé d'appairage d'un objet connecté (16) à un réseau de communication local, mis en œuvre par un système de communication local comprenant un équipement de routage (10) et au moins un équipement de confiance (12)
**caractérisé en ce qu'**il comprend des étapes de :
- détection (E52), par ledit équipement de routage (10), d'un objet connecté (16) en attente d'appairage au sein dudit réseau local ;
- attribution (E54), par ledit équipement de routage (10), d'un score de confiance audit objet connecté, à partir d'informations relatives audit objet connecté ;
- notification (E55), par ledit équipement de routage (10), audit au moins un équipement de confiance (12), de la demande d'appairage dudit objet connecté et dudit score de confiance attribué ;
- envoi, par ledit au moins un équipement de confiance (12) d'une notification de refus d'appairage (E56N) ou d'acceptation d'appairage (E56Y), établie sur le fondement de ladite demande d'appairage dudit objet connecté et dudit score de confiance attribué ;
- réception, par ledit équipement de routage (10), de ladite notification de refus d'appairage (E56N) ou d'acceptation d'appairage (E56Y);
- si ladite notification reçue est une notification de refus d'appairage (E56N), blocage (E57N) par ledit équipement de routage (10), d'un accès dudit objet connecté (16) audit réseau local ;
- si ladite notification reçue est une notification d'acceptation d'appairage (E56Y), transmission, par ledit équipement de routage (10), audit objet connecté (16) d'un ensemble de paramètres de configuration pour se connecter audit réseau local.

## Patentansprüche

1. Verfahren zur Filterung des Zugriffs eines verbundenen Objekts (16) auf ein lokales Kommunikationsnetz, implementiert durch eine Routing-Einrichtung (10) des lokalen Netzes,
**dadurch gekennzeichnet, dass** es folgende Schritte umfasst:
- Erkennen (E52) eines verbundenen Objekts (16), das innerhalb des lokalen Netzes auf eine Kopplung wartet;
- Zuweisen (E54) eines Vertrauens-Scores zu dem verbundenen Objekt auf der Grundlage von Informationen über das verbundene Objekt;
- Benachrichtigen (E55) mindestens einer vertrauenswürdigen Einrichtung (12) des lokalen Netzes über die Kopplungsanfrage des verbundenen Objekts und den zugewiesenen Vertrauens-Score;
- Empfangen einer Benachrichtigung über eine Kopplungsablehnung (E56N) oder eine Kopplungsannahme (E56Y) von der mindestens einen vertrauenswürdigen Einrichtung (12), die auf Basis der Kopplungsanfrage des verbundenen Objekts und des zugewiesenen Vertrauens-Scores erstellt wurde;
- wenn die empfangene Benachrichtigung eine Kopplungsablehnungsbenachrichtigung (E56N) ist, Blockieren (E57N) eines Zugriffs des verbundenen Objekts (16) auf das lokale Netz,
- wenn die empfangene Benachrichtigung eine Kopplungsannahmebenachrichtigung (E56Y) ist, Übertragen eines Satzes Konfigurationsparameter zur Verbindung mit dem lokalen Netz an das verbundene Objekt (16).

2. Zugriffsfilterungsverfahren nach Anspruch 1, **dadurch gekennzeichnet, dass** die Informationen über das verbundene Objekt (16) von dem verbundenen Objekt empfangen (E53) und/oder durch die Routing-Einrichtung als Reaktion auf eine Anforderung, die an einen entfernten Server gerichtet wird, erhalten werden.

3. Zugriffsfilterungsverfahren nach einem der Ansprüche 1 und 2, **dadurch gekennzeichnet, dass** die Informationen über das verbundene Objekt zu der Gruppe gehören, die Folgendes umfasst:
- eine MAC-Adresse des verbundenen Objekts;
- eine Leistung eines Signals, das von dem verbundenen Objekt empfangen wird;
- eine Verbindungskennung des verbundenen Objekts;
- eine Produktkennung des verbundenen Objekts;
- eine Herstellerkennung des verbundenen Objekts;
- eine Gültigkeitsdauer eines Sicherheitszertifikats, das mit dem verbundenen Objekt assoziiert ist;
- eine Sicherheitsstufe eines Sicherheitszertifikats, das mit dem verbundenen Objekt assoziiert ist;
- eine Kennung einer Organisation, die ein mit dem verbundenen Objekt assoziiertes Sicherheitszertifikat ausgestellt hat.

4. Zugriffsfilterungsverfahren nach einem der Ansprüche 1 bis 3, **dadurch gekennzeichnet, dass** der zugewiesene Vertrauens-Score aus einer Aggregation von mindestens einigen der Elemente resultiert, die zu der Gruppe gehören, die Folgendes umfasst:
- einen Schwachstellen-Score des verbundenen Objekts;
- einen Score des Schutzes der Privatsphäre eines Benutzers des verbundenen Objekts;
- einen Ökodesign-Score des verbundenen Objekts.

5. Zugriffsfilterungsverfahren nach einem der Ansprüche 1 bis 4, **dadurch gekennzeichnet, dass** die mindestens eine vertrauenswürdige Einrichtung, die über die Kopplungsanfrage benachrichtigt wird, die zu dem verbundenen Objekt nächstgelegene vertrauenswürdige Einrichtung oder eine vertrauenswürdige Einrichtung, die zu einem Administrator des lokalen Netzes gehört, ist.

6. Zugriffsfilterungsverfahren nach einem der Ansprüche 1 bis 5, **dadurch gekennzeichnet, dass** es ferner Folgendes umfasst:
- Senden (E61), an die mindestens eine vertrauenswürdige Einrichtung (12), einer Anforderung zum Erhalten eines mit dem verbundenen Objekt assoziierten Codes;
- Verbinden (E65) der Routing-Einrichtung mit dem verbundenen Objekt auf Grundlage des von der mindestens einen vertrauenswürdigen Einrichtung erhaltenen Codes, um die Informationen über das verbundene Objekt zu erhalten.

7. Zugriffsfilterungsverfahren nach Anspruch 6, **dadurch gekennzeichnet, dass** die Anforderung zum Erhalten eines Codes eine Anforderung zum Scannen eines mit dem verbundenen Objekt assoziierten QR-Codes ist und dass der gescannte QR-Code durch die Routing-Einrichtung von der mindestens einen vertrauenswürdigen Einrichtung empfangen wird (E63).

8. Zugriffsfilterungsverfahren nach einem der Ansprüche 1 bis 7, **dadurch gekennzeichnet, dass** es, wenn die empfangene Benachrichtigung nach Abschluss einer Kopplung des verbundenen Objekts mit der Routing-Einrichtung des lokalen Kommunikationsnetzes eine Kopplungsannahmebenachrichtigung (E56Y) ist, das Senden (E71), an die mindestens eine vertrauenswürde Einrichtung, einer Anfrage nach einer gewünschten Kopplung des verbundenen Objekts mit der mindestens einen vertrauenswürdigen Einrichtung und, im Falle des Empfangens (E72) einer gewünschten Kopplung mit der mindestens einen vertrauenswürdigen Einrichtung, das Senden (E73), an das verbundene Objekt, einer Anforderung zur Eröffnung einer Kopplungssequenz umfasst.

9. Zugriffsfilterungsverfahren nach Anspruch 8, **dadurch gekennzeichnet, dass**, wenn das verbundene Objekt, das mit der Routing-Einrichtung gekoppelt ist, nicht dazu in der Lage ist, auch mit der mindestens einen vertrauenswürdigen Einrichtung gekoppelt zu sein, die Routing-Einrichtung als Proxy-Server zwischen der mindestens einen vertrauenswürdigen Einrichtung und dem verbundenen Objekt fungiert.

10. Zugriffsfilterungsverfahren nach einem der Ansprüche 1 bis 9, **dadurch gekennzeichnet, dass** die Routing-Einrichtung ein Zugriffsgateway zu dem lokalen Kommunikationsnetz ist.

11. Computerprogrammprodukt, das Programmcodeanweisungen umfasst, die bei seiner Ausführung durch einen innerhalb einer Routing-Einrichtung (10) integrierten Prozessor ein Zugriffsfilterungsverfahren nach einem der Ansprüche 1 bis 10 implementieren.

12. Routing-Einrichtung (10) eines lokalen Kommunikationsnetzes,
**dadurch gekennzeichnet, dass** sie einen Prozessor umfasst, der dazu konfiguriert ist, folgende Schritte durchzuführen:
- Erkennen (E52) eines verbundenen Objekts (16), das innerhalb des lokalen Netzes auf eine Kopplung wartet;
- Zuweisen (E54) eines Vertrauens-Scores zu dem verbundenen Objekt auf der Grundlage von Informationen über das verbundene Objekt;
- Benachrichtigen (E55) mindestens einer vertrauenswürdigen Einrichtung (12) des lokalen Netzes über die Kopplungsanfrage des verbundenen Objekts und den zugewiesenen Vertrauens-Score;
- Empfangen einer Benachrichtigung über eine Kopplungsablehnung (E56N) oder eine Kopplungsannahme (E56Y) von der mindestens einen vertrauenswürdigen Einrichtung (12), die auf Basis der Kopplungsanfrage des verbundenen Objekts und des zugewiesenen Vertrauens-Scores erstellt wurde;
- wenn die empfangene Benachrichtigung eine Kopplungsablehnungsbenachrichtigung (E56N) ist, Blockieren (E57N) eines Zugriffs des verbundenen Objekts (16) auf das lokale Netz,
- wenn die empfangene Benachrichtigung eine Kopplungsannahmebenachrichtigung (E56Y) ist, Übertragen eines Satzes Konfigurationsparameter zur Verbindung mit dem lokalen Netz an das verbundene Objekt (16).

13. Home-Gateway (HGW), **dadurch gekennzeichnet, dass** es einen Prozessor umfasst, der dazu konfiguriert ist, folgende Schritte durchzuführen:
- Erkennen eines verbundenen Objekts, das innerhalb des lokalen Netzes auf eine Kopplung wartet;
- Zuweisen eines Vertrauens-Scores zu dem verbundenen Objekt auf der Grundlage von Informationen über das verbundene Objekt;
- Benachrichtigen mindestens einer vertrauenswürdigen Einrichtung (12) des lokalen Netzes über die Kopplungsanfrage des verbundenen Objekts und den zugewiesenen Vertrauens-Score;
- Empfangen einer Benachrichtigung über eine Kopplungsablehnung (E56N) oder eine Kopplungsannahme (E56Y) von der mindestens einen vertrauenswürdigen Einrichtung, die auf Basis der Kopplungsanfrage des verbundenen Objekts und des zugewiesenen Vertrauens-Scores erstellt wurde;
- wenn die empfangene Benachrichtigung eine Kopplungsablehnungsbenachrichtigung (E56N) ist, Blockieren (E57N) eines Zugriffs des verbundenen Objekts (16) auf das lokale Netz;
- wenn die empfangene Benachrichtigung eine Kopplungsannahmebenachrichtigung (E56Y) ist, Übertragen eines Satzes Konfigurationsparameter zur Verbindung mit dem lokalen Netz an das verbundene Objekt (16).

14. Verfahren zum Koppeln eines verbundenen Objekts (16) mit einem lokalen Kommunikationsnetz, implementiert durch ein lokales Kommunikationssystem, das eine Routing-Einrichtung (10) und mindestens eine vertrauenswürdige Einrichtung (12) umfasst,
**dadurch gekennzeichnet, dass** es folgende Schritte umfasst:
- Erkennen (E52), durch die Routing-Einrichtung (10), eines verbundenen Objekts (16), das innerhalb des lokalen Netzes auf eine Kopplung wartet;
- Zuweisen (E54), durch die Routing-Einrichtung (10), eines Vertrauens-Scores zu dem verbundenen Objekt auf der Grundlage von Informationen über das verbundene Objekt;
- Benachrichtigen (E55), durch die Routing-Einrichtung (10), der mindestens einen vertrauenswürdigen Einrichtung (12) über die Kopplungsanfrage des verbundenen Objekts und den zugewiesenen Vertrauens-Score;
- Übermitteln, durch die mindestens eine vertrauenswürdige Einrichtung (12), einer Benachrichtigung über eine Kopplungsablehnung (E56N) oder eine Kopplungsannahme (E56Y), die auf Basis der Kopplungsanfrage des verbundenen Objekts und des zugewiesenen Vertrauens-Scores erstellt wurde;
- Empfangen, durch die Routing-Einrichtung (10), der Benachrichtigung über die Kopplungsablehnung (E56N) oder die Kopplungsannahme (E56Y);
- wenn die empfangene Benachrichtigung eine Kopplungsablehnungsbenachrichtigung (E56N) ist, Blockieren (E57N), durch die Routing-Einrichtung (10), eines Zugriffs des verbundenen Objekts (16) auf das lokale Netz;
- wenn die empfangene Benachrichtigung eine Kopplungsannahmebenachrichtigung (E56Y) ist, Übertragen, durch die Routing-Einrichtung (10), eines Satzes Konfigurationsparameter zur Verbindung mit dem lokalen Netz an das verbundene Objekt (16).

## Claims

1. Method for filtering access of a connected object (16) to a local communication network, implemented by a routing equipment (10) of said local network, **characterized in that** it comprises steps of:
- detecting (E52) a connected object (16) waiting for pairing within said local network;
- assigning (E54) a confidence score to said connected object, based on information relating to said connected object;
- providing notification (E55), to at least one trusted equipment (12) of said local network, of the pairing request of said connected object and of said assigned confidence score;
- receiving a notification of pairing refusal (E56N) or of pairing acceptance (E56Y), from said at least one trusted equipment (12), established on the basis of said pairing request of said connected object and of said assigned confidence score;
- if said received notification is a pairing refusal notification (E56N), blocking (E57N) an access of said connected object (16) to said local network;
- if said received notification is a pairing acceptance notification (E56Y), transmitting to said connected object (16) a set of configuration parameters for connecting to said local network.

2. Access filtering method according to Claim 1, **characterized in that** said information relating to said connected object (16) is received (E53) from said connected object and/or obtained by said routing equipment upon request addressed to a remote server.

3. Access filtering method according to either one of Claims 1 and 2, **characterized in that** said information relating to said connected object belongs to the group containing:
- a MAC address of said connected object;
- a strength of a signal received from said connected object;
- a connection identifier of said connected object;
- a product identifier of said connected object;
- a manufacturer identifier of said connected object;
- a period of validity of a security certificate associated with said connected object;
- a security level of a security certificate associated with said connected object;
- an identifier of the organization that issued a security certificate associated with said connected object.

4. Access filtering method according to any one of Claims 1 to 3, **characterized in that** said assigned confidence score results from an aggregation of at least some of the elements belonging to the group containing:
- a vulnerability score of said connected object;
- a score of respect for the privacy of a user of said connected object;
- an ecodesign score of said connected object.

5. Access filtering method according to any one of Claims 1 to 4, **characterized in that** said at least one trusted equipment to which said pairing request is notified is said trusted equipment closest to said connected object or a trusted equipment belonging to an administrator of said local network.

6. Access filtering method according to any one of Claims 1 to 5, **characterized in that** it also comprises:
- sending (E61), to said at least one trusted equipment (12), a request to obtain a code associated with said connected object;
- connecting (E65) said routing equipment, using said code obtained from said at least one trusted equipment, to said connected object, in order to obtain said information relating to said connected object.

7. Access filtering method according to Claim 6, **characterized in that** said request to obtain a code is a request to scan a QR-code associated with said connected object, and **in that** the scanned QR-code is received (E63) by said routing equipment from said at least one trusted equipment.

8. Access filtering method according to any one of Claims 1 to 7, **characterized in that**, when said received notification is a pairing acceptance notification (E56Y), at the end of pairing of said connected object with said routing equipment of said local communication network, it comprises sending (E71), to said at least one trusted equipment, an expression of a wish to pair said connected object with said at least one trusted equipment, and, in the event of receipt (E72) of a wish to pair with said at least one trusted equipment, sending (E73), to said connected object, a request to open a pairing sequence.

9. Access filtering method according to Claim 8, **characterized in that**, if said connected object paired with said routing equipment is unsuitable for also being paired with said at least one trusted equipment, said routing equipment acts as a proxy server between said at least one trusted equipment and said connected object.

10. Access filtering method according to any one of Claims 1 to 9, **characterized in that** said routing equipment is an access gateway to said local communication network.

11. Computer program product comprising program code instructions for implementing an access filtering method according to any one of Claims 1 to 10 when it is executed by a processor integrated into a routing equipment (10).

12. Routing equipment (10) of a local communication network,
**characterized in that** it comprises a processor configured to execute steps of:
- detecting (E52) a connected object (16) waiting for pairing within said local network;
- assigning (E54) a confidence score to said connected object, based on information relating to said connected object;
- providing notification (E55), to at least one trusted equipment (12) of said local network, of the pairing request of said connected object and of said assigned confidence score;
- receiving a notification of pairing refusal (E56N) or of pairing acceptance (E56Y), from said at least one trusted equipment (12), established on the basis of said pairing request of said connected object and of said assigned confidence score;
- if said received notification is a pairing refusal notification (E56N), blocking (E57N) an access of said connected object (16) to said local network;
- if said received notification is a pairing acceptance notification (E56Y), transmitting to said connected object (16) a set of configuration parameters for connecting to said local network.

13. Residential gateway (HGW), **characterized in that** it comprises a processor configured to execute steps of:
- detecting a connected object waiting for pairing within said local network;
- assigning a confidence score to said connected object, based on information relating to said connected object;
- providing notification, to at least one trusted equipment (12) of said local network, of the pairing request of said connected object and of said assigned confidence score;
- receiving a notification of pairing refusal (E56N) or of pairing acceptance (E56Y), from said at least one trusted equipment, established on the basis of said pairing request of said connected object and of said assigned confidence score;
- if said received notification is a pairing refusal notification (E56N), blocking (E57N) an access of said connected object (16) to said local network;
- if said received notification is a pairing acceptance notification (E56Y), transmitting to said connected object (16) a set of configuration parameters for connecting to said local network.

14. Method for pairing a connected object (16) to a local communication network, implemented by a local communication system comprising a routing equipment (10) and at least one trusted equipment (12),
**characterized in that** it comprises steps of:
- said routing equipment (10) detecting (E52) a connected object (16) waiting for pairing within said local network;
- said routing equipment (10) assigning (E54) a confidence score to said connected object, based on information relating to said connected object;
- said routing equipment (10) providing notification (E55), to said at least one trusted equipment (12), of the pairing request of said connected object and of said assigned confidence score;
- said at least one trusted equipment (12) sending a notification of pairing refusal (E56N) or of pairing acceptance (E56Y), established on the basis of said pairing request of said connected object and of said assigned confidence score;
- said routing equipment (10) receiving said pairing refusal notification (E56N) or pairing acceptance notification (E56Y);
- if said received notification is a pairing refusal notification (E56N), said routing equipment (10) blocking (E57N) an access of said connected object (16) to said local network;
- if said received notification is a pairing acceptance notification (E56Y), said routing equipment (10) transmitting to said connected object (16) a set of configuration parameters for connecting to said local network.
